# EUROPEAN PATENT SPECIFICATION

(11) **EP 3 799 717 B1**
(45) Date of publication and mention of the grant of the patent: **12.04.2023**
(21) Application number: 20190786.2
(22) Date of filing: 12.08.2020
(51) Int. Cl.: A01K 1/06

(54) **ENTRANCE CONTROL MECHANISM**
EINGANGSKONTROLLMECHANISMUS
MÉCANISME DE COMMANDE D'ENTRÉE

(30) Priority: 14.08.2019 GB 201911648
(43) Date of publication of application: 07.04.2021
(73) Proprietor: F. Klucznik & Son Limited, Adderley Green Stoke-on-Trent, Staffordshire ST3 5BW (GB)
(72) Inventor: ALLEN, Robert Edward, Stoke-on-Trent, Staffordshire ST3 5BW (GB)
(74) Representative: Swindell & Pearson Limited

(56) References cited:
- GB-A- 2 173 386
- US-A- 4 302 908
- US-A- 4 579 084
- US-A- 5 138 981

## Description

This invention concerns an entrance control mechanism, a barrier arrangement including an entrance control mechanism, and also a animal handling apparatus.

In animal handling apparatus such as cattle crushes, generally a pair of doors are provided at an exit end which provide a yoke to restrain the cow by the neck. In a first receiving condition it is desirable for the exit end of the crush to be at least partially open with the doors pointing inwardly, such that a cow entering thereinto will see a potential escape route and approach the yoke doors. This will generally cause the yoke doors to move outwardly to a fully closed position, restraining the cow in the yoke.

To depart the crush it is desirable to open the yoke doors outwardly, whilst preventing them from opening inwardly, so as to permit a cow to readily leave the crush. It is then desirable for the yoke doors to readily be reset pointing inwardly into the crush leaving a space between the doors for a cow to approach, such that the cow becomes firmly held in the yoke.

US4302908A discloses a livestock detaining gate comprising a gate latch system for locking gate panels into a closed position, and for permitting the panels to rotate into either a forward or rear open position. The latch system comprises two cylindrical pipe sections, one to the front and one to the rear of the closed gate panels. A cantilever lift system is included, in which rotation of a control rod caused the cantilever lift system to raise one of the pipe sections clear gate panel, allowing the gate panels to be swung open in a desired direction.

US4579084A discloses an animal headgate comprising a locking mechanism. The locking mechanism includes a support bracket which pivotally supports a rear latch plate and a forward latch plate. The latch plates are biased downwardly by springs and are interconnected to a latch operator handle by a rocker arm. Movement of the latch operator handle releases the doors of animal headgate from the locking mechanism.

GB2173386A discloses yet another entrance control mechanism comprising a locking mechanism wherein the headgates can be manually released.

According to a first aspect of the invention there is provided an entrance control mechanism for controlling a barrier member which can open in first and second opposite directions from a closed position, the mechanism comprising first and second stop members which are locatable on opposite sides of the barrier member in the closed position, and which are each selectively movable between an engaged position preventing the barrier member moving therepast, and a disengaged position in which the barrier member can move past the respective stop member, the mechanism being configured such that if a barrier member is urged against either the first or second stop member when in an engaged position, from a respective first or second open position, the respective first or second stop member will be moved to a disengaged position to allow the barrier member to move therepast, the mechanism being configured such that if the barrier member is urged against the first stop member from the first open position the first stop member will move to a disengaged position, but the second stop member will not move to a disengaged position, and if the barrier member is urged against the second stop member from the second open position, the second and first stop members will move to a disengaged position.

Control means are provided which when actuated in a first way causes the second stop member to be moved to a disengaged position, but leaves the first stop member in an engaged position, and when actuated in a second way, causes the first stop member to be moved to a disengaged position, but leaves the second stop member in an engaged position.

A link is provided between the first and second stop members with an isolating part in the link, the isolating part being movable between inactive and active conditions, such that with the isolating part in the inactive condition if the second stop member is moved to a disengaged position the link will cause the first stop member to be moved with the second stop member, but with the isolating part in the active condition, the link will not cause the first stop member to be moved with the second stop member.

The link may be configured such that if the control means is actuated in the first way the isolating part will be moved to the active condition and if activated in the second way the isolating part will be in the inactive condition.

The isolating part may be pivotally movable between the active and inactive conditions. The isolating part may be urged in a rest state to the inactive condition.

The control means may comprise a control member movable in a first direction to cause activation in the first way, and movable in a second direction to cause activation in the second way. The control member may be rotabably movable.

The control member may be selectively engageable when moved in a first direction to engage with an abutment on the second stop member to initially move the isolating part to an active condition, and thereafter move the second stop member independently of the first stop member.

The control member may be selectively engageable when moved in a second direction to engage with an abutment on the first stop member to move the first stop member independently of the second stop member.

The mechanism may be configured such that if the second stop member is urged to a disengaged position other than by the control means, the first stop member will be also be urged via the link, with the isolating part inactive, to a disengaged position.

The first and second stop members may be urged in a rest state to an engaged position and may be resiliently urged to a rest condition.

According to a further aspect of the invention there is provided a barrier arrangement including a barrier member and an entrance control mechanism according to any of the preceding ten paragraphs.

A pair of barrier members may be provided which are pivotally movable between open and closed positions, and in a closed position extend towards each other in a coplanar configuration from their respective pivotal mountings.

The barrier members may be interconnected such that they simultaneously move between open and closed positions.

An interconnecting arrangement may be provided including a gear mounted directly on the pivotal mounting of one of the barrier members which connects via a linkage to the pivotal mounting of the other barrier member.

The linkage may include an idler gear. A crank may be provided on the pivotal mounting of the other barrier member, and a pivotal link may be provided between the crank and the idler gear.

The invention still further provides animal handling apparatus with at an exit end, a barrier arrangement according to any of the preceding five paragraphs, with the barrier member being openable in the first direction into the apparatus, and being openable in the second direction out of the apparatus, to permit an animal to exit the apparatus.

According to another aspect of the invention there is provided an animal handling apparatus with a barrier arrangement at an exit end, the barrier arrangement including a pair of barrier members which are pivotally movable between open and closed positions, and in a closed position extend towards each other in a coplanar configuration from their respective pivotal mountings. The pair of barrier members are interconnected such that they simultaneously move between open and closed positions. An interconnecting arrangement is provided including a gear mounted directly on the pivotal mounting of one of the barrier members which connects via a linkage to the pivotal mounting of the other barrier member.

The linkage may include an idler gear. A crank may be provided on the pivotal mounting of the other barrier member, and a pivotal link may be provided between the crank and the idler gear.

The gear and idler gear may be offset from a central position above the barrier members.

The barrier arrangement may include a control mechanism that controls opening and closing of the barrier members.

The control mechanism may be the control mechanism as described in any preceding paragraph.

The present invention will now be described by way of example only and with reference to the accompanying drawings, in which:-
Fig 1 is a diagrammatic perspective view of a barrier arrangement according to the invention in a first position;
Fig 2 is a similar view to Fig 1 but in a second position;
Fig 3 is in a similar view to Fig 1 but in a third position;

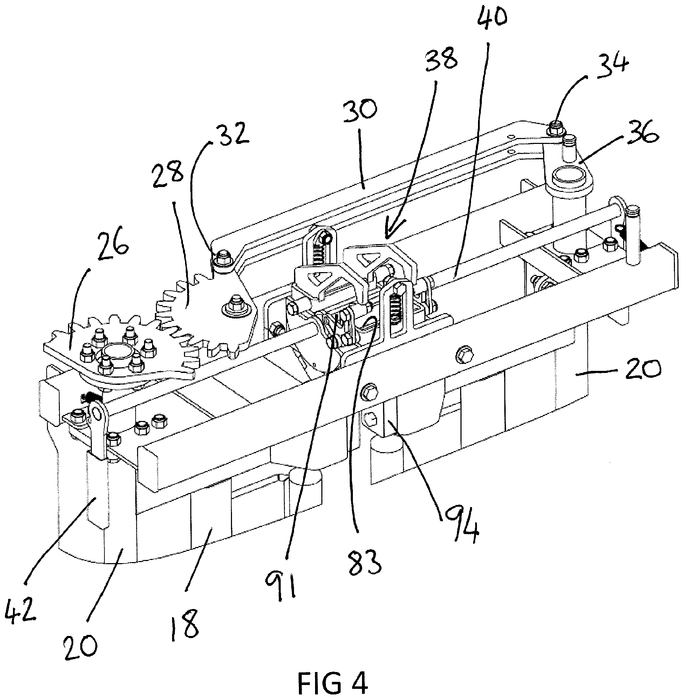

Fig 4 is a diagrammatic perspective view of an upper part of the arrangement of Fig 1 in the second position;

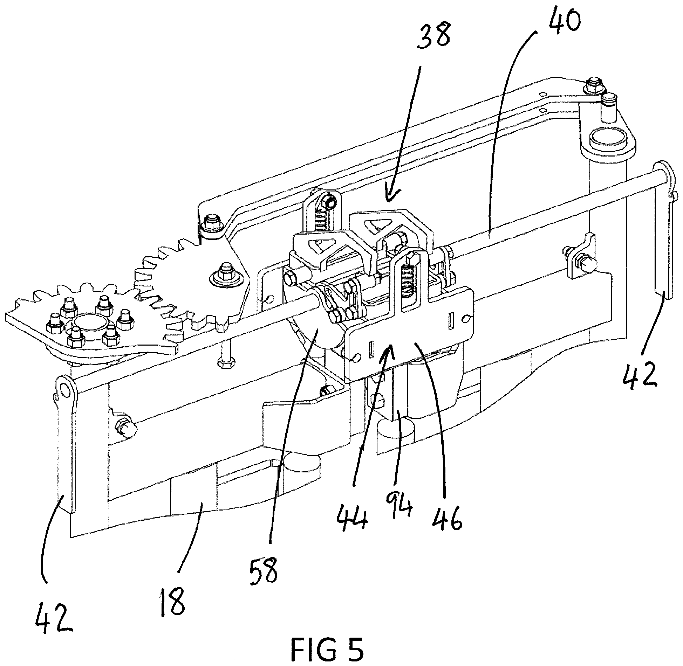

Fig 5 is a similar view to Fig 4 but with some items removed;

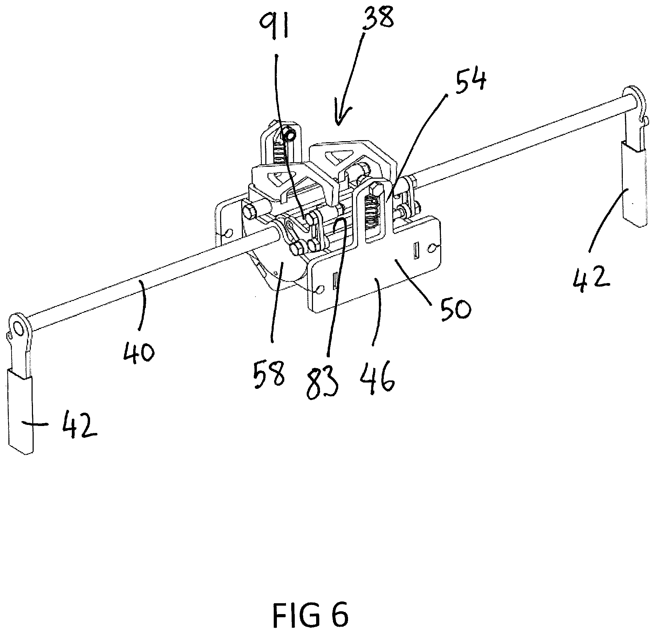

Fig 6 is a similar view to Fig 4 but with still further items removed;
Fig 7 is diagrammatic perspective view of a part of the arrangement of Fig 1;

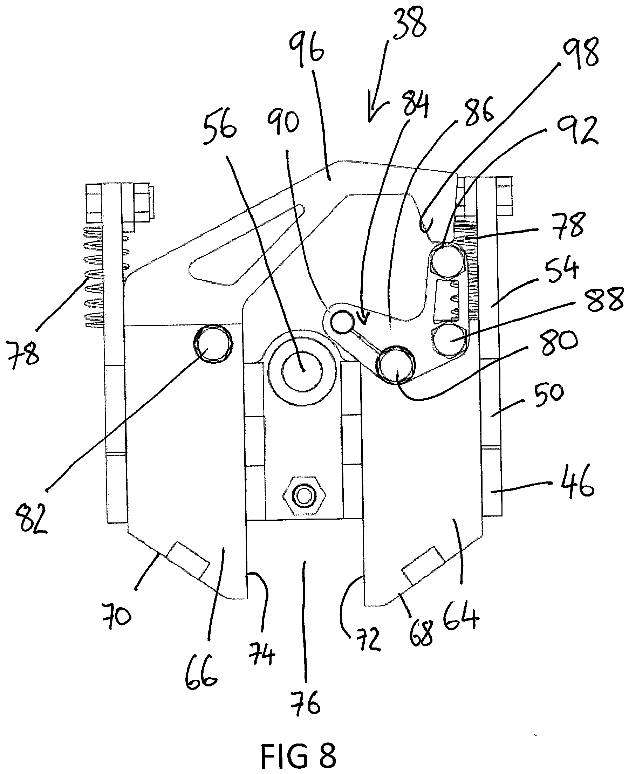

Fig 8 is a diagrammatic side view of the part shown in Fig 7;

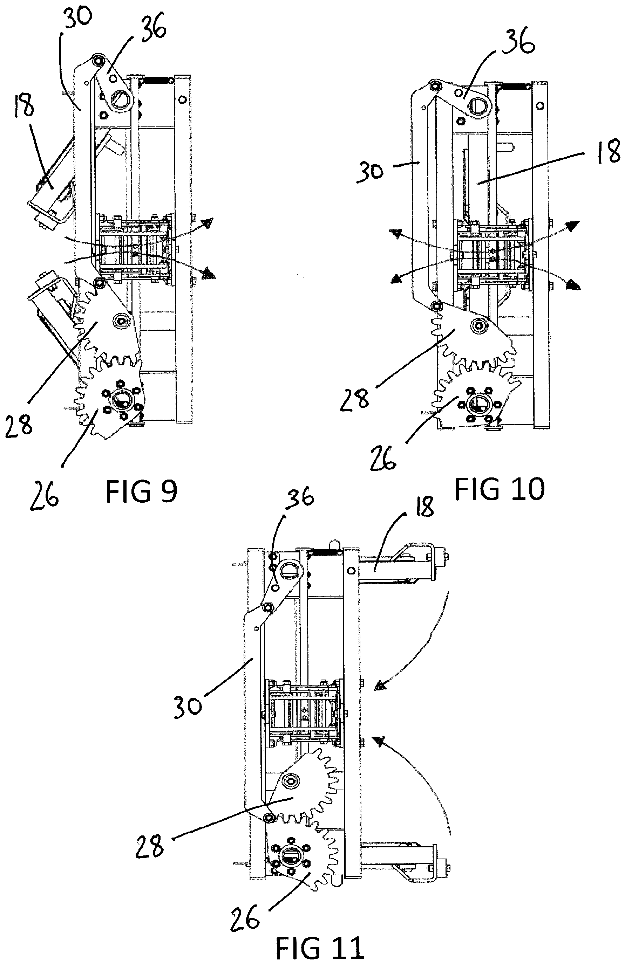

Figs 9 to 11 are diagrammatic plan views of the arrangement of Fig 1 in respectively the first, second and third positions;

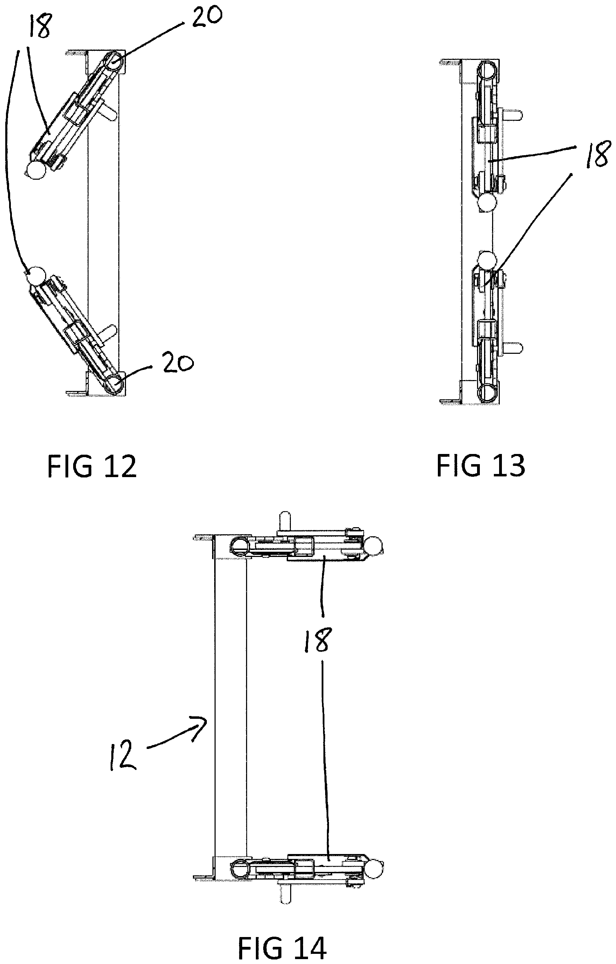

Figs 12 to 14 are respectively similar views to Figs 9 to 11 but with part of the arrangement omitted;

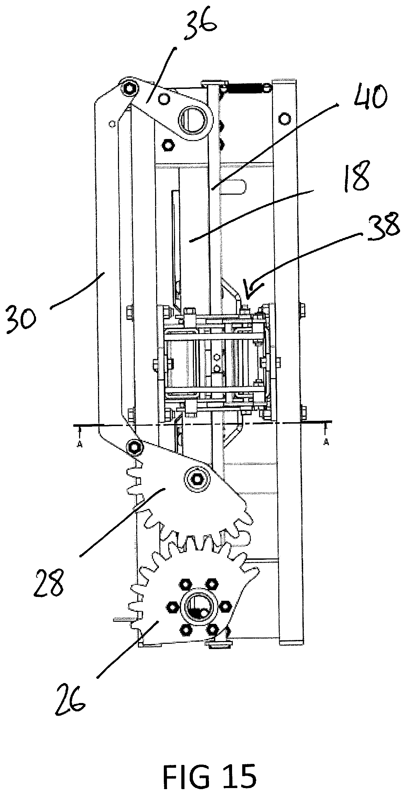

Fig 15 is a diagrammatic plan view of the arrangement of Fig 1;
Figs 16 to 18 are diagrammatic sequential sectional views along the line A - A of Fig 15, showing the arrangement moving respectively from the first position to the second position;
Figs 19 to 22 are respectively sequential views similar to Fig 16 but showing the arrangement moving from the second to the third position;
Figs 23 to 26 are respectively sequential views similar to Fig 16 showing the arrangement being moved from the third position back to the first position;
Figs 27 and 28 are respectively sequential views similar to Fig 16 showing the arrangement being moved from the second to the first position;

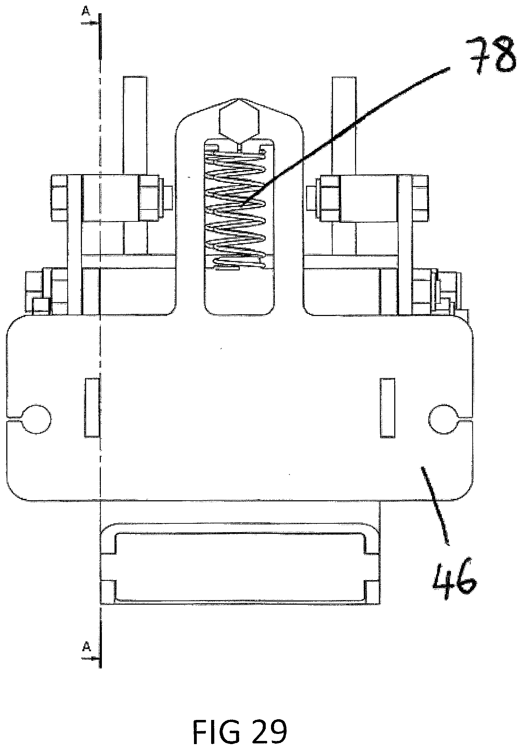

Fig 29 is a diagrammatic front view of a part of the barrier arrangement;
Fig 30 is a cross sectional view along the line A - A of Fig. 29; and
Fig 31 is a diagrammatic perspective view of animal handling apparatus according to the invention in use.

The drawings show a barrier arrangement 10 suitable for use in providing a yoke at the exit end of cattle handling apparatus 100. The arrangement 10 includes a frame 12 with upper and lower transverse parts 14, 16. Two doors 18 are provided which each include a spindle 20 pivotally mounted between outer ends of the upper and lower transverse parts 14, 16 of the frame 12.

The doors 18 each include a C shape part 22 extending from the spindle 20, and inner uprights 24 which are adjustably mounted by two brackets 27 extending from upper and lower webs 29 between the spindle 20 and the stem of the C shape part 22, to provide adjustable width doors 18 as is conventional, and will not therefore be described in any further detail.

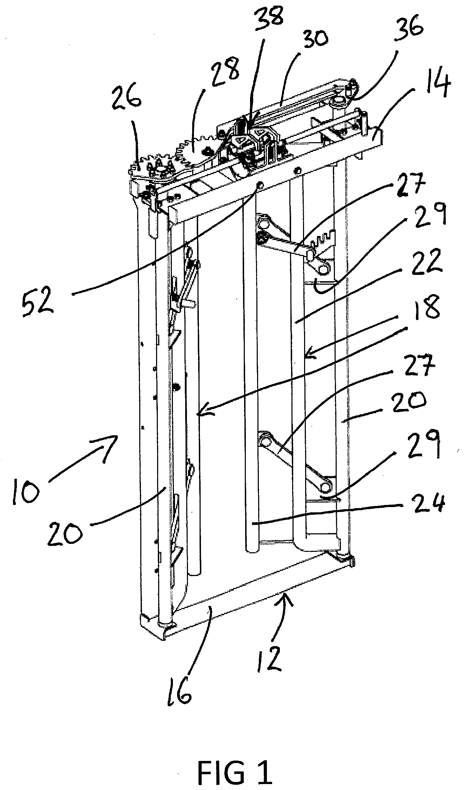

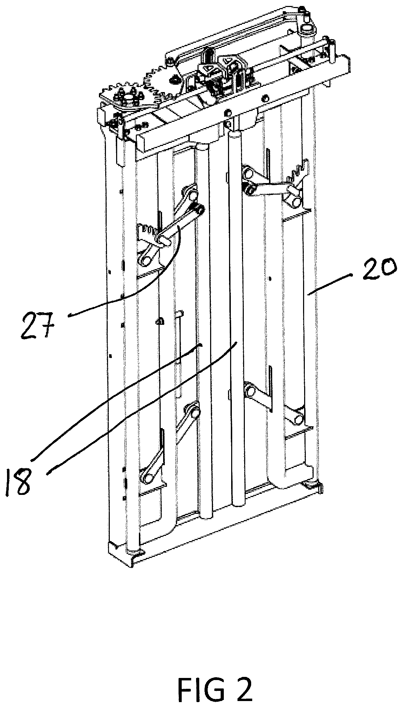

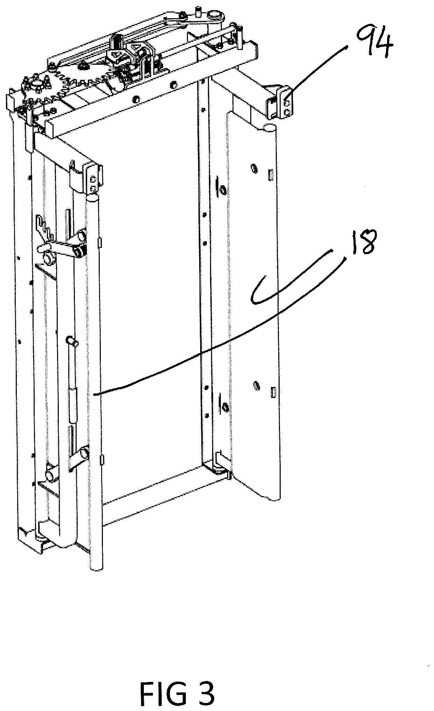

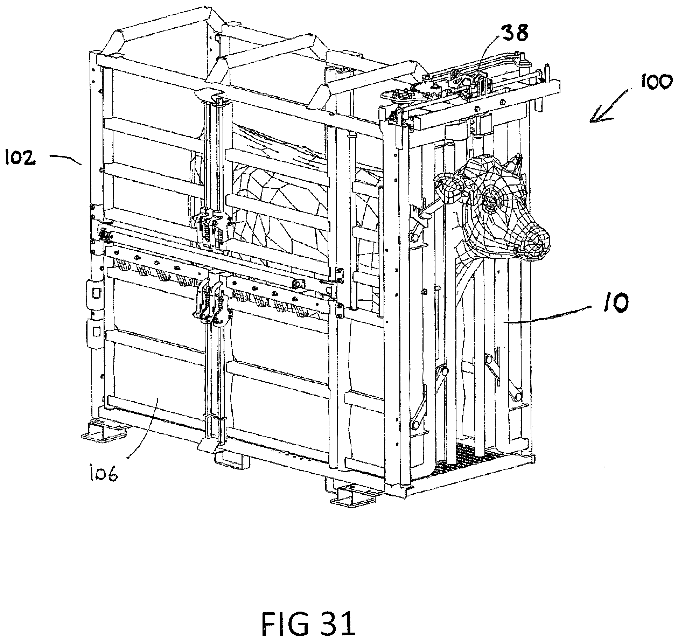

The doors 18 are selectively movable for instance between a first position as shown in Fig 1 where the doors 18 are partially closed and extend into the animal handling apparatus. In practice an animal such as a cow will be led into the apparatus and will see the opening between the doors 18 and is likely to move towards this. In doing so the animal will engage against the doors 18 and move them to a closed position as shown in Figs 2 and 31, with the doors 18 providing a yoke to hold the neck of the animal. When it is required to release the animal the doors 18 will be opened fully outwardly as shown in Fig 3 for the animal to exit the apparatus. It will then be required to readily return the doors 18 from this third fully open position to the first position as shown in Fig 1.

The doors 18 are interconnected so as to be simultaneously movable together or apart. As can be seen in Fig 1 and other Figures, a driven gear 26 is provided directly on the top of the left hand spindle 20. The driven gear 26 is engagable with an idler gear 28 to reverse the direction of rotation. The idler gear 28 pivotally mounts an elongate linkage 30 at one end 32. The other end 34 of the linkage 30 is pivotally mounted to a crank 36 mounted directly on the top of the other spindle 20. This arrangement provides for effective direct coupling between the doors 18 to provide simultaneous movement.

An entrance control mechanism 38 is provided centrally on top of the upper frame part. A horizontal shaft 40 extends rotatably through the control mechanism 38, and handles 42 are provided at each end of the shaft 40 to permit manual operation of the mechanism 38 from either side of the apparatus. As can be seen from Fig 1 and other drawings, in a rest position the handles 42 point downwardly.

The mechanism 38 comprises a frame 44 with identical spaced front and rear brackets 46, and identical spaced side brackets 48. The front and rear brackets 46 include a horizontally aligned rectangular part 50 which can be mounted to the upper frame part 14 by bolts 52 as shown. An upward extension 54 is provided centrally of the rectangular part 50. A cylindrical passage 56 is provided extending across the top of the side brackets 48 which acts as a bearing for the shaft 40. The arrangement on each side of the mechanism 38 is identical, and therefore generally only the arrangement on one side will be described.

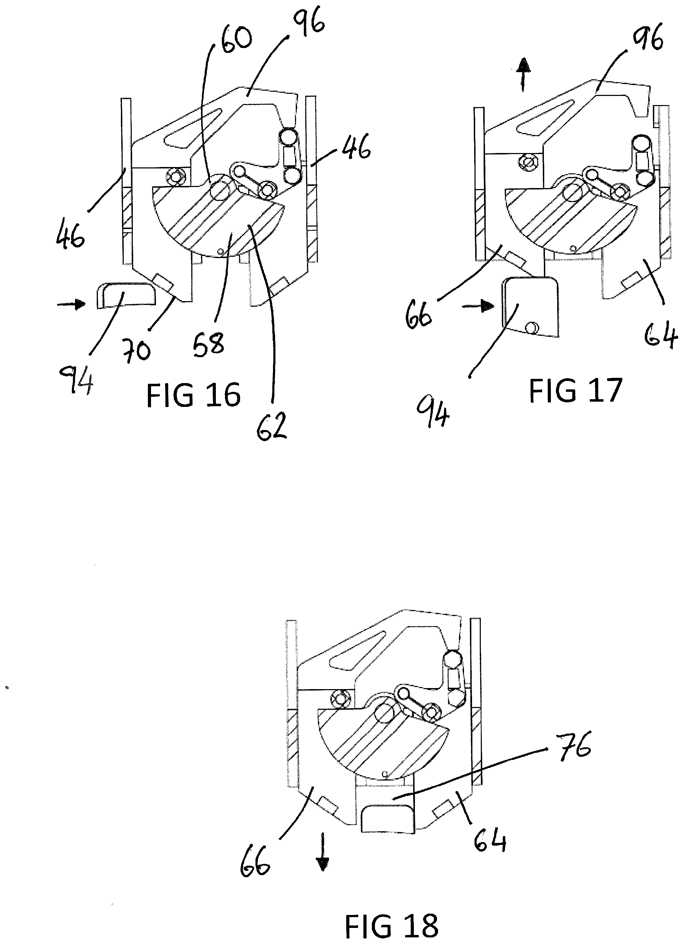

A handle control plate 58 is provided on the shaft 40 immediately outside the passage 56. The plate 58 has a collar part 60 surrounding the shaft 40 and a slightly less than generally semi-circular portion 62 extending coaxially therefrom. In a rest position as shown for example in Fig 16, the plate 58 will be turned slightly clockwise from a symmetrical alignment about a vertical line, with the portion 62 extending downwardly.

Front and rear locking members 64, 66 are provided which are slidably movable in a vertical direction relative to the frame 44. The front and rear locking members 64, 66 each have an inclined contact face 68, 70 which is inclined outwardly and upwardly from an inner vertical face 72, 74, with a space 76 being provided between the inner faces 72, 74 of the front and rear locking members 64, 66.

In a rest position, the front and rear locking members 64, 66 are urged downwardly by gravity, and also by springs 78 engaging against the upper part of the upward extensions 54 of the front and rear brackets 46. Horizontal fingers 80, 82 extend outwardly from respectively the front and rear locking members 64, 66 above the frame side brackets 48, and in a rest state the fingers 80, 82 will substantially engage on top of the handle control plate 58.

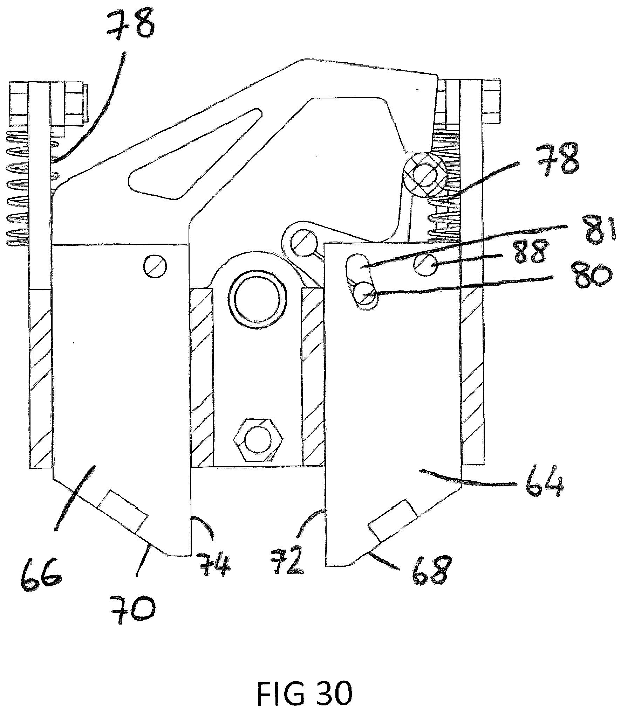

The finger 80 extends through an arcuate slot 81 (see Fig. 30) about the mounting location 88, in the front locking member 64. The arcuate slot 81 limits the extent of pivotal movement of the plate 86. The fingers 80 on each side are interconnected by a transverse bar 83.

The finger 80 on the front locking member 64 is mounted to a link isolator 84 in the form of a profiled plate 86 which is pivotally mounted to the front locking member 64 at a location 88 towards the front top corner and the side of the front locking member 64. The plate 86 is cranked, with a counterbalancing extension 90 towards a rear end. The extensions 90 on each side are interconnected by a transverse bar 91. A contact member 92 is provided at the front end of the crank.

The finger 80 is formed by a bolt 85 with a plastics material spacer 87 behind the bolt head. The finger 82 is formed by a bolt 89 with a plastics material sleeve 93 behind the bolt head. It is the spacer 87 and sleeve 93 which are engageable respectively with the plate 58.

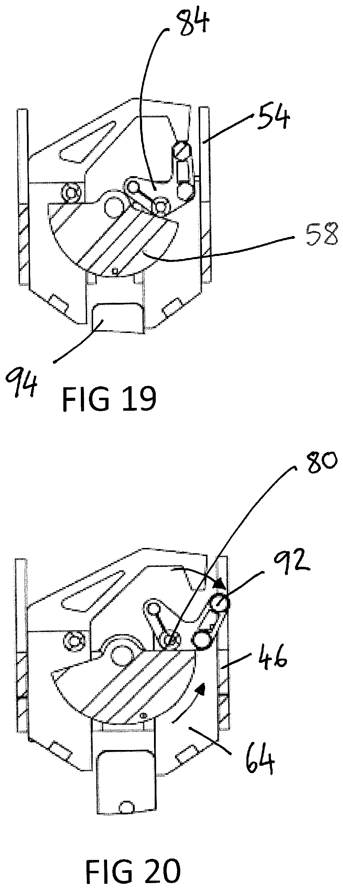

In a rest state as shown for example in Fig 19, the contact member 92 points substantially upwardly. A downwardly pointing cranked linking arm 96 is provided on top of the rear locking member 66 with a downwardly pointing finger 98 which when the link isolator 84 in a rest state, engages on top of the contact member 92 as shown for instance in Fig 16.

The front and rear locking members 64, 66 are positioned such that in a rest state they will engage against a respective top end finger 94 on the doors 18, and the doors 18 can only move past the respective locking members 64, 66, when the locking members are raised in the control mechanism frame 44.

The control mechanism 38 is located centrally. This means that the doors 18 latch at the furthest possible point from their axis of rotation, meaning the load passed from the doors 18, via top end fingers 94 into the control mechanism is as small as possible. Because the point at which the doors 18 are locked is further from the axis of rotation than the point at which the animal impacts the doors 18 (relative to the point of rotation) this reduces the force applied to the control mechanism 38. By directly mounting the driven gear 26 on the left hand spindle 20, the driven gear 26 and idler gear 28 are offset from the central position above the doors 18 which allows the control mechanism 38 to be located centrally, so that the load applied to the control mechanism 38 is reduced as described above.

Figs 16 to 28 illustrate operation of the barrier arrangement 10 and hence the control mechanism 38. In Fig 16 the arrangement 10 is shown in the first position as in Fig 1, with the doors 18 pointed inwardly into the animal handling apparatus, and the finger 94 on top of a door 18 is shown in Fig 16.

In Fig 17 the door 18 is shown being moved to the second closed condition. The finger 94 engages against the contact face 70 of the rear locking member 66 which urges the rear locking member 66 upwardly as shown in Fig 17, but the front locking member 64 remains in a closed, down position. The door 18 will then locate in the gap 76 and engage against the inner face 72 of the front locking member 64, and the rear locking member 66 will drop back to a rest position as shown in Fig 18. An animal will now be restrained in the handling apparatus.

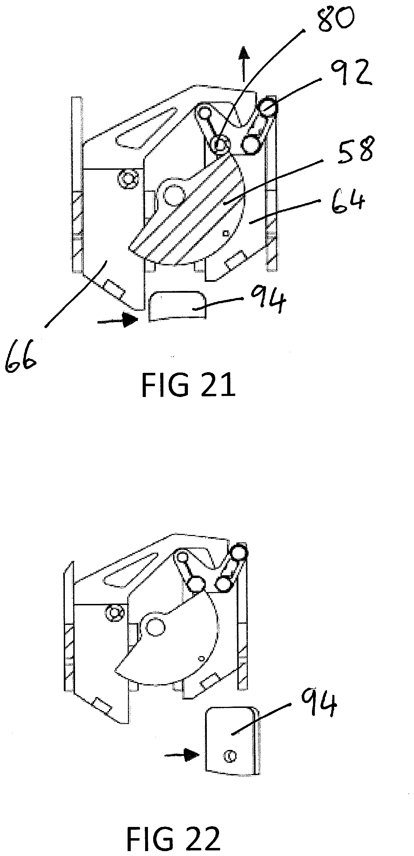

To release the animal from the position shown in Fig 19, one of the handles 42 is pushed forwards, rotating the shaft 40 anticlockwise and hence rotating the handle control plate 58 as shown in Fig 20. The plate 58 engages against the front locking member finger 80 which initially causes the link isolator 84 to pivot in a clockwise direction until the fingers 80 reach an upper end of the arcuate slot 81, having previously been at a lower end of the slot 81. Further rotation of the handle control plate 58 will then cause the front locking member 64 to rise upwardly as shown in Fig 21 by virtue of the handle control plate 58 engaging against the finger 80 thereby permitting the door 18 to move forwards to a fully open third position as shown in Fig 3, and is illustrated in Fig 22.

As the contact member 92 has moved forwards away from the finger 98, the rear locking member 66 will not rise. Once the door 18 has moved clear off the mechanism 38 and the handle 42 is pointing downwardly again, the front locking member 64 will drop back down again.

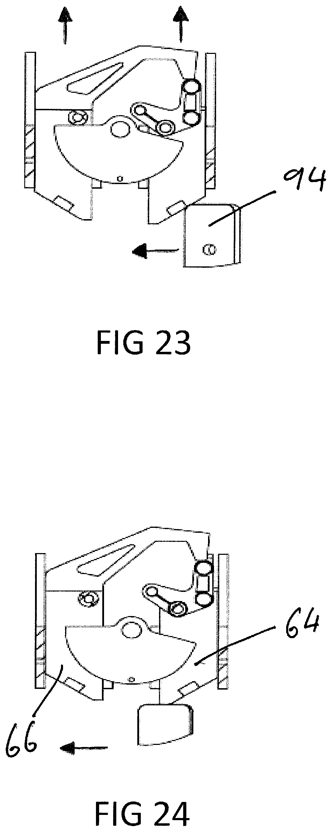

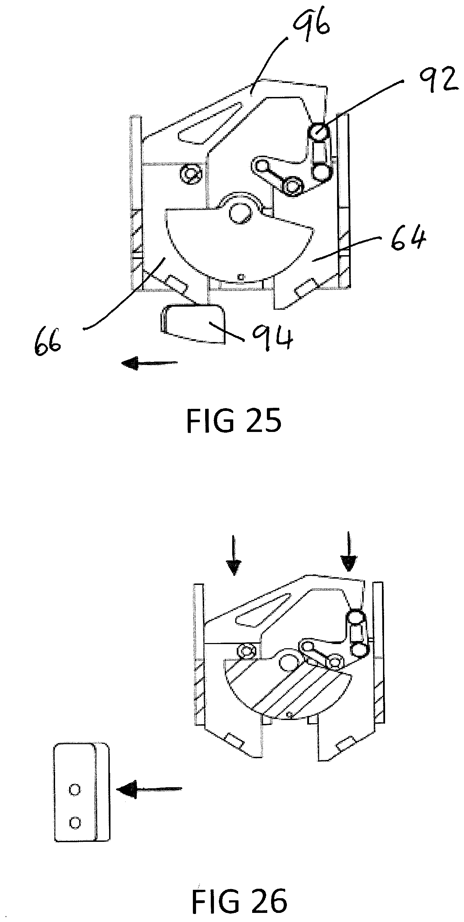

Once an animal has been released from the apparatus it is usually desired to return the apparatus 10 directly to the first position to receive a further animal. This is achieved by manually pushing the doors 18 rearwardly, noting that only one of the doors 18 requires pushing as the other will move with it, i.e. to the left as shown in the drawings as illustrated in Figs 23 to 26. As the door finger 94 contacts the contact face 68 on the front locking member 64, this will cause the front locking member 64 to rise. As the link isolator 84 has not been rotated from its rest position, the contact member 92 will engage against the cranked linking arm 96, thereby also causing the rear locking member 66 to rise. As long as the door 18 is pushed with sufficient force, this should cause the doors 18 to move as shown in Figs 23 to 26 and to skip through the control mechanism 38 whilst both the front and rear locking members 64, 66 are raised. Once the doors 18 have return to the first position the front and rear locking members 64, 66 will return to their rest position in the path of the doors as shown in Fig 26.

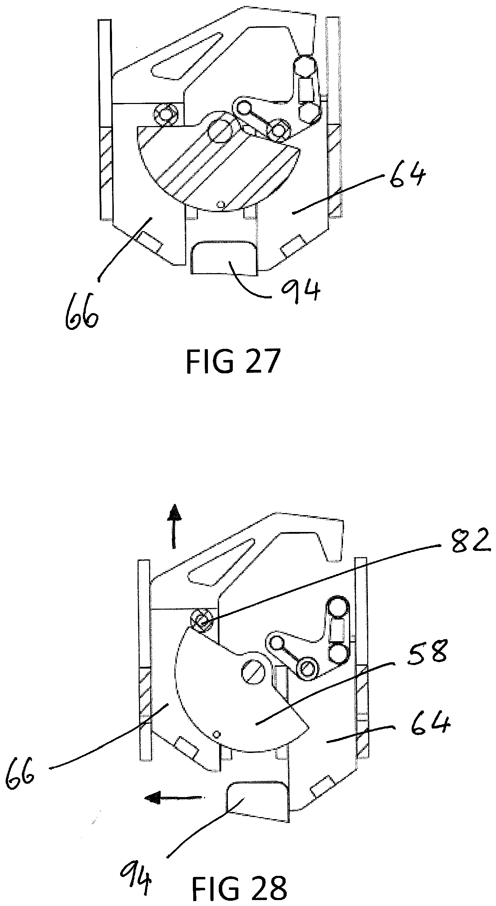

Figs 27 and 28 indicate the position where it may be required to move the doors 18 from the second closed position to the first open position. In this instance the handle 42 is pushed rearwardly, and hence the shaft 40 is turned in a clockwise direction, and the handle control plate 58 engages with the finger 82 on the rear locking member 66, causing the rear locking member 66 only to raise to enable the door 18 to move therepast as shown in Fig 28. Once the handle 42 is released the rear locking member 66 will return to its usual lower position, with the handle control plate 58 substantially resting against the two fingers 80, 82.

Fig. 31 shows an animal handling apparatus 100 in the form of a cattle crush. The apparatus 100 has a rear entrance 102. Side walls 106 are provided. The barrier arrangement 10 with the control mechanism 38 is provided at the front end of the apparatus 100 which can be operated as described above.

There is thus described a barrier arrangement, entrance control mechanism and animal handling apparatus, which readily provide for switching between the respective positions and automatic movement to the second position from the first position, and back from the third position to the first position when required. Ready manual engagement can be used to enable movement between the second and third positions, or if required between the second and first positions.

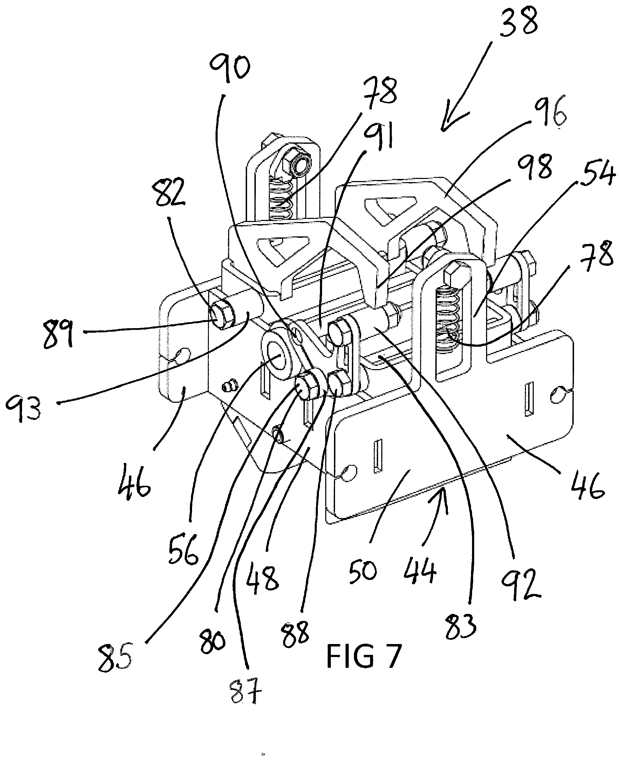

Whilst the invention has been described in relation to a barrier arrangement for animal handling apparatus, it is to be realised that such an entrance control mechanism could be used in a wide range of applications. As is illustrated for instance in Fig 7, the entrance control mechanism is a self-contained unit and therefore is readily suited for retro fitting as maybe appropriate, or for use in existing or other applications.

Various modifications may be made without departing from the scope of the invention. For example, different linkage arrangements may be used. The locking members may take a different format. In some arrangements the mechanism may be operable only with a single barrier or door.

## Claims

1. An entrance control mechanism (38) for controlling a barrier member which can open in first and second opposite directions from a closed position, the mechanism (38) comprising first and second stop members which are locatable on opposite sides of the barrier member in the closed position, and which are each selectively movable between an engaged position preventing the barrier member moving therepast, and a disengaged position in which the barrier member can move past the respective stop member, the mechanism being configured such that if a barrier member is urged against either the first or second stop member when in an engaged position, from a respective first or second open position, the respective first or second stop member will be moved to a disengaged position to allow the barrier member to move therepast, the mechanism (38) being configured such that if the barrier member is urged against the first stop member from the first open position the first stop member will move to a disengaged position, but the second stop member will not move to a disengaged position, and if the barrier member is urged against the second stop member from the second open position, the second and first stop members will move to a disengaged position;
wherein control means are provided which when actuated in a first way causes the second stop member to be moved to a disengaged position, and leaves the first stop member in an engaged position, and when actuated in a second way, causes the first stop member to be moved to a disengaged position, and leaves the second stop member in an engaged position; and
wherein a link is provided between the first and second stop members,
**characterized in** an isolating part in the link, the isolating part being movable between inactive and active conditions, such that with the isolating part in the inactive condition if the second stop member is moved to a disengaged position the link will cause the first stop member to be moved with the second stop member, but with the isolating part in the active condition, the link will not cause the first stop member to be moved with the second stop member.

2. An entrance control mechanism (38) as claimed in claim 1, wherein the link is configured such that if the control means is actuated in the first way the isolating part will be moved to the active condition and if activated in the second way the isolating part will be in the inactive condition.

3. An entrance control mechanism (38) as claimed in any preceding claim, wherein the isolating part is pivotally movable between the active and inactive conditions; and/or
wherein the isolating part is urged in a rest state to the inactive condition.

4. An entrance control mechanism (38) as claimed in any preceding claim, wherein the control means comprises a control member movable in a first direction to cause activation in the first way, and movable in a second direction to cause activation in the second way; wherein the control member is rotabably movable.

5. An entrance control mechanism as claimed in claim 4, wherein the control member is selectively engageable when moved in a first direction to engage with an abutment on the second stop member to initially move the isolating part to the active condition, and thereafter move the second stop member independently of the first stop member; and/or
wherein the control member is selectively engageable when moved in a second direction to engage with an abutment on the first stop member to move the first stop member independently of the second stop member

6. An entrance control mechanism (38) as claimed in any preceding claim, wherein the mechanism (38) is configured such that if the second stop member is urged to a disengaged position other than by the control means, the first stop member will be also be urged via the link, with the isolating part inactive, to a disengaged position.

7. An entrance control mechanism (38) as claimed in any preceding claim, wherein the first and second stop members are urged in a rest state to an engaged position and may be resiliently urged to a rest condition.

8. A barrier arrangement (10) including a barrier member and an entrance control mechanism (38) according to any of the preceding claims.

9. A barrier arrangement (10) as claimed in claim 8, wherein a pair of barrier members are provided which are pivotally movable between open and closed positions, and in a closed position extend towards each other in a coplanar configuration from their respective pivotal mountings, wherein the barrier members are interconnected such that they simultaneously move between open and closed positions.

10. A barrier arrangement (10) as claimed in claim 9, wherein an interconnecting arrangement is provided including a gear (26) mounted directly on the pivotal mounting of one of the barrier members which connects via a linkage (30) to the pivotal mounting of the other barrier member.

11. A barrier arrangement as claimed in claim 10, wherein the linkage includes an idler gear (28), wherein a crank is provided on the pivotal mounting of the other barrier member, and a pivotal link is provided between the crank and the idler gear (28).

12. An animal handling apparatus (100) with at an exit end, a barrier arrangement according to any of claims 8 to 11, with the barrier member being openable in the first direction into the apparatus, and being openable in the second direction out of the apparatus, to permit an animal to exit the apparatus.

## Patentansprüche

1. Zugangssteuerungsmechanismus (38) zum Steuern eines Absperrelements, das sich aus einer geschlossenen Position in eine erste und eine zweite Richtung, die einander entgegengesetzt sind, öffnen kann, wobei der Mechanismus (38) ein erstes und ein zweites Anschlagelement umfasst, die an entgegengesetzten Seiten des Absperrelements in der geschlossenen Position anordenbar sind und die jeweils selektiv zwischen einer Eingriffsposition, in der verhindert wird, dass sich das Absperrelement daran vorbei bewegt, und einer Außereingriffsposition, in der sich das Absperrelement an dem jeweiligen Anschlagelement vorbei bewegen kann, bewegbar sind, wobei der Mechanismus so konfiguriert ist, dass, wenn ein Absperrelement aus einer jeweiligen ersten oder zweiten offenen Position gegen entweder das erste oder das zweite Anschlagelement gedrängt wird, wenn es sich in einer Eingriffsposition befindet, das jeweilige erste oder zweite Anschlagelement in eine Freigabeposition bewegt wird, um es dem Absperrelement zu ermöglichen, sich daran vorbei zu bewegen, wobei der Mechanismus (38) so konfiguriert ist, dass, wenn das Absperrelement aus der ersten offenen Position gegen das erste Anschlagelement gedrängt wird, sich das erste Anschlagelement in eine Außereingriffsposition bewegt, das zweite Anschlagelement sich jedoch nicht in eine Außereingriffsposition bewegt, und wenn das Absperrelement aus der zweiten offenen Position gegen das zweite Anschlagelement gedrängt wird, sich das zweite und das erste Anschlagelement in eine Außereingriffsposition bewegen;
wobei ein Steuermittel vorgesehen ist, das, wenn es in einer ersten Weise betätigt wird, bewirkt, dass das zweite Anschlagelement in eine Außereingriffsposition bewegt wird, und das erste Anschlagelement in einer Eingriffsposition belässt, und das, wenn es in einer zweiten Weise betätigt wird, bewirkt, dass das erste Anschlagelement in eine Außereingriffsposition bewegt wird, und das zweite Anschlagelement in einer Eingriffsposition belässt; und
wobei eine Verbindungseinrichtung zwischen dem ersten und dem zweiten Anschlagelement vorgesehen ist, **gekennzeichnet durch**
ein Trennteil in der Verbindungseinrichtung, wobei das Trennteil zwischen einem inaktiven und einem aktiven Zustand bewegbar ist, so dass, wenn das Trennteil in dem inaktiven Zustand ist, wenn das zweite Anschlagelement in eine Außereingriffsposition bewegt wird, die Verbindungseinrichtung bewirkt, dass das erste Anschlagelement mit dem zweiten Anschlagelement bewegt wird, aber wenn das Trennteil in dem aktiven Zustand ist, die Verbindungseinrichtung nicht bewirkt, dass das erste Anschlagelement mit dem zweiten Anschlagelement bewegt wird.

2. Zugangssteuerungsmechanismus (38) nach Anspruch 1, wobei die Verbindungseinrichtung so konfiguriert ist, dass, wenn das Steuermittel in der ersten Weise betätigt wird, das Trennteil in den aktiven Zustand bewegt wird, und wenn es in der zweiten Weise aktiviert wird, das Trennteil in dem inaktiven Zustand sein wird.

3. Zugangssteuerungsmechanismus (38) nach einem der vorhergehenden Ansprüche, wobei das Trennteil zwischen dem aktiven und dem inaktiven Zustand schwenkbar ist; und/oder
wobei das Trennteil in einem Ruhezustand in den inaktiven Zustand gedrängt wird.

4. Zugangssteuerungsmechanismus (38) nach einem der vorhergehenden Ansprüche, wobei das Steuermittel ein Steuerelement umfasst, das in einer ersten Richtung beweglich ist, um eine Aktivierung in der ersten Weise zu bewirken, und das in einer zweiten Richtung beweglich ist, um eine Aktivierung in der zweiten Weise zu bewirken; wobei das Steuerelement drehbar beweglich ist.

5. Zugangssteuerungsmechanismus nach Anspruch 4, wobei das Steuerelement selektiv in Eingriff gebracht werden kann, wenn es in eine erste Richtung bewegt wird, um mit einem Widerlager an dem zweiten Anschlagelement in Eingriff zu kommen, um das Trennteil zunächst in den aktiven Zustand zu bewegen und danach das zweite Anschlagelement unabhängig vom ersten Anschlagelement zu bewegen; und/oder
wobei das Steuerelement selektiv in Eingriff gebracht werden kann, wenn es in eine zweite Richtung bewegt wird, um mit einem Widerlager an dem ersten Anschlagelement in Eingriff zu kommen, um das erste Anschlagelement unabhängig vom zweiten Anschlagelement zu bewegen.

6. Zugangssteuerungsmechanismus (38) nach einem der vorhergehenden Ansprüche, wobei der Mechanismus (38) so konfiguriert ist, dass, wenn das zweite Anschlagelement von etwas anderem als durch das Steuermittel in eine Außereingriffsposition gedrängt wird, das erste Anschlagelement ebenfalls über die Verbindungseinrichtung in eine Außereingriffsposition gedrängt wird, wobei das Trennteil inaktiv ist.

7. Zugangssteuerungsmechanismus (38) nach einem der vorhergehenden Ansprüche, wobei das erste und das zweite Anschlagelement in einem Ruhezustand in eine Eingriffsposition gedrängt werden und elastisch in einen Ruhezustand gedrängt werden können.

8. Absperranordnung (10) mit einem Absperrelement und einem Zugangssteuerungsmechanismus (38) nach einem der vorhergehenden Ansprüche.

9. Absperranordnung (10) nach Anspruch 8, wobei ein Paar von Absperrelementen vorgesehen ist, die schwenkbar zwischen einer offenen und einer geschlossenen Position beweglich sind und sich in einer geschlossenen Position in einer koplanaren Konfiguration von ihren jeweiligen Schwenkhalterungen aus aufeinander zu erstrecken, wobei die Absperrelemente so miteinander verbunden sind, dass sie sich simultan zwischen einer offenen und einer geschlossenen Position bewegen.

10. Absperranordnung (10) nach Anspruch 9, wobei eine Verbindungsanordnung vorgesehen ist, die ein direkt an der Schwenkhalterung eines der Absperrelemente angebrachtes Getriebe (26) umfasst, das über ein Gestänge (30) mit der Schwenkhalterung des anderen Absperrelements verbunden ist.

11. Absperranordnung nach Anspruch 10, wobei das Gestänge ein Zwischenrad (28) umfasst, wobei eine Kurbel an der Schwenkhalterung des anderen Absperrglieds vorgesehen ist und eine schwenkbare Verbindungseinrichtung zwischen der Kurbel und dem Zwischenrad (28) vorgesehen ist.

12. Tierhandhabungsvorrichtung (100) mit einer Absperranordnung nach einem der Ansprüche 8 bis 11 an einem Ausgangsende, wobei das Absperrelement in der ersten Richtung in die Vorrichtung hinein geöffnet werden kann und in der zweiten Richtung aus der Vorrichtung heraus geöffnet werden kann, damit ein Tier die Vorrichtung verlassen kann.

## Revendications

1. Un mécanisme (38) de commande d'entrée pour commander un élément de barrière qui peut s'ouvrir dans des première et deuxième directions opposées à partir d'une position de fermeture, le mécanisme (38) comprenant des premier et deuxième organes d'arrêt qui sont aptes à être placés sur des côtés opposés de l'élément de barrière dans la position de fermeture, et qui sont chacun sélectivement mobiles entre une position d'engagement empêchant que l'élément de barrière se déplace au-delà d'eux, et une position de désengagement dans laquelle l'élément de barrière peut passer au-delà de l'organe d'arrêt respectif, le mécanisme étant configuré de sorte que, si un élément de barrière est poussé contre le premier ou le deuxième organe d'arrêt lorsque cet élément est dans une position d'engagement, à partir d'une première ou d'une deuxième position d'ouverture respective, le premier ou le deuxième organe d'arrêt respectif sera déplacé vers une position de désengagement pour permettre à l'élément de barrière de se déplacer au-delà de lui, le mécanisme (38) étant configuré de telle sorte que, si l'élément de barrière est poussé contre le premier organe d'arrêt à partir de la première position d'ouverture, le premier organe d'arrêt se déplacera vers une position de désengagement, mais le deuxième organe d'arrêt ne se déplacera pas vers une position de désengagement, et si l'élément de barrière est poussé contre le deuxième organe d'arrêt depuis la deuxième position d'ouverture, les deuxième et premier organes d'arrêt se déplaceront vers une position de désengagement ;
des moyens de commande sont prévus, qui, lorsqu'ils sont actionnés d'une première manière, amènent le deuxième organe d'arrêt à être déplacé vers une position de désengagement, et laissent le premier organe d'arrêt dans une position d'engagement, et lorsqu'ils sont actionnés d'une deuxième manière, amènent le premier organe d'arrêt à être déplacé vers une position de désengagement, et laissent le deuxième organe d'arrêt dans une position d'engagement ; et
une liaison est prévue entre les premier et deuxième organes d'arrêt,
**caractérisé par** une pièce d'isolation dans la liaison, la pièce d'isolation étant mobile entre les états d'inactivité et d'activité, de sorte qu'avec la pièce d'isolation dans l'état d'inactivité, si le deuxième organe d'arrêt est déplacé vers une position de désengagement, la liaison amènera le premier élément d'inclinaison à être déplacé avec le deuxième organe d'arrêt, mais, avec la pièce d'isolation dans l'état d'activité, la liaison n'amènera pas le premier organe d'arrêt à être déplacé avec le deuxième organe d'arrêt.

2. Un mécanisme (38) de commande d'entrée selon la revendication 1, dans lequel la liaison est configurée de sorte que, si les moyens de commande sont actionnés de la première manière, la partie d'isolation sera déplacée vers l'état d'activité, et, si ils sont activés de la deuxième manière, la pièce d'isolation sera à l'état d'inactivité.

3. Un mécanisme (38) de commande d'entrée selon l'une quelconque des revendications précédentes, dans lequel la pièce d'isolation est mobile de manière pivotante entre les états d'activité et d'inactivité ; et/ou
dans lequel la pièce d'isolation est pressée dans un état de repos vers l'état d'inactivité.

4. Un mécanisme de commande d'entrée (38) selon l'une quelconque des revendications précédentes, dans lequel les moyens de commande comprennent un organe de commande mobile dans une première direction pour provoquer une activation dans la première manière, et mobile dans une deuxième direction pour provoquer une activation dans la deuxième manière ; l'organe de commande est mobile en rotation.

5. Un mécanisme de commande d'entrée selon la revendication 4, dans lequel l'organe de commande est apte à être mis en engagement de manière sélective lorsqu'il est déplacé dans une première direction de façon à venir en engagement avec une butée présente sur le deuxième organe d'arrêt pour déplacer de façon initiale la pièce d'isolation vers l'état d'activité, et ensuite pour déplacer le deuxième organe d'arrêt indépendamment du premier organe d'arrêt ; et/ou
dans lequel l'organe de commande est apte à être mis en engagement sélectivement lorsqu'il est déplacé dans une deuxième direction de façon à venir en engagement avec une butée présente sur le premier organe d'arrêt pour déplacer le premier organe d'arrêt indépendamment du deuxième organe d'arrêt.

6. Un mécanisme (38) de commande d'entrée selon l'une quelconque des revendications précédentes, dans lequel le mécanisme (38) est configuré de telle sorte que, si le deuxième organe d'arrêt est pressé vers une position de désengagement autrement que par les moyens de commande, le premier organe d'arrêt sera également pressé via la liaison, avec la pièce d'isolation inactive, vers une position de désengagement.

7. Un mécanisme (38) de commande d'entrée selon l'une quelconque des revendications précédentes, dans lequel les premier et deuxième organes d'arrêt sont pressés dans un état de repos vers une position d'engagement et sont aptes à être pressés de manière élastique vers un état de repos.

8. Un agencement de barrière (10) comprenant un élément de barrière et un mécanisme (38) de commande d'entrée selon l'une quelconque des revendications précédentes.

9. Un agencement de barrière (10) selon la revendication 8, dans lequel une paire d'éléments de barrière sont prévus qui sont mobiles de manière pivotante entre des positions d'ouverture et de fermeture, et, dans une position de fermeture, s'étendent l'un vers l'autre dans une configuration coplanaire à partir de leurs supports pivotants respectifs, les éléments de barrière étant interconnectés de telle sorte qu'ils se déplacent simultanément entre des positions d'ouverture et de fermeture.

10. Un agencement de barrière (10) selon la revendication 9, dans lequel un agencement d'interconnexion est prévu, comprenant une roue d'engrenage (26) montée directement sur la monture pivotante de l'un des éléments de barrière qui se connecte via une tringlerie (30) à la monture pivotante de l'autre élément de barrière.

11. Un agencement de barrière selon la revendication 10, dans lequel la tringlerie comprend une roue d'engrenage folle (28), une manivelle étant prévue sur la monture pivotante de l'autre élément de barrière, et une liaison pivotante étant prévue entre la manivelle et la roue d'engrenage folle (28).

12. Un appareil (100) de manipulation d'animaux avec, à une extrémité de sortie, un agencement de barrière selon l'une quelconque des revendications 8 à 11, l'élément de barrière étant apte à s'ouvrir dans la première direction vers l'intérieur de l'appareil, et étant apte à s'ouvrir dans la deuxième direction hors de l'appareil, pour permettre à un animal de sortir de l'appareil.
